# EUROPÄISCHE PATENTANMELDUNG

(11) **EP 2 568 261 A2**
(43) Veröffentlichungstag der Anmeldung: **13.03.2013**
(21) Anmeldenummer: 12181284.6
(22) Anmeldetag: 22.08.2012
(51) Int. Cl.: G01D 5/244, G01D 5/245

(54) **Positions-/Wegmesssystem**

(30) Priorität: 06.09.2011 DE 102011053309
(71) Anmelder: BALLUFF GmbH, 73765 Neuhausen (DE)
(72) Erfinder: Burkhardt, Thomas, 73119 Zell (DE)
(74) Vertreter: Hoeger, Stellrecht & Partner Patentanwälte

(57) **Zusammenfassung**

Es wird ein Positions-/Wegmesssystem vorgeschlagen, welches mindestens einen kodierten Maßkörper (12) mit mindestens einer Kodierungsspur, welche sich in einer Messrichtung (20) erstreckt, und eine Sensoreinrichtung (36) mit mindestens einem für die Kodierung sensitiven Sensorkopf (16), umfasst, wobei der mindestens eine Sensorkopf mindestens eine erste Sensoreinheit (44) und eine zweite Sensoreinheit (46) umfasst, welche jeweilige Sensorsignale bereitstellen und welche in der Messrichtung beabstandet zueinander sind.

## Beschreibung

Die Erfindung betrifft ein Positions-/Wegmesssystem, umfassend mindestens einen kodierten Maßkörper mit mindestens einer Kodierungsspur, welche sich in einer Messrichtung erstreckt, und eine Sensoreinrichtung mit mindestens einem für die Kodierung sensitiven Sensorkopf.

Wegsensoren mit magnetisch kodiertem Maßkörper sind in dem Buch "Lineare Weg- und Abstandssensoren" von T. Burkhardt, A. Feinäugle, S. Fericean und A. Forkl, Verlag Moderne Industrie, Bibliothek der Technik, Band 271 München, 2004 beschrieben.

Aus der DE 10 2009 016 663 A1 ist ein Positions-/Wegmesssystem bekannt, umfassend mindestens einen kodierten Maßkörper mit mindestens einer Kodierungsspur und eine Sensoreinrichtung mit mindestens einem für die Kodierung sensitiven Sensor, wobei die mindestens eine Kodierungsspur mindestens in einer ersten Richtung periodisch alternierend angeordnete Hauptfelder mindestens eines ersten Typs und eines zweiten Typs aufweist. Die Hauptfelder des ersten Typs und die Hauptfelder des zweiten Typs sind jeweils in Unterfelder von mindestens zwei unterschiedlichen Typen unterteilt.

Aus der DE 10 2008 055 680 A1 ist ein Positions-/Wegmesssystem, umfassend einen Sensorkopf und einen kodierten Maßkörper, bekannt, wobei der Maßkörper einen Absolutpositionsbestimmungsbereich und einen Inkrementalpositionsbestimmungsbereich aufweist.

Aus der DE 20 2009 003 253 U1 ist ein kodierter Maßkörper für ein Positions-/Wegmesssystem, umfassend ein Trägerband, mindestens eine Kodierungslage aus Kodierungsmaterial, welche auf dem Trägerband angeordnet ist, und ein Abdeckband, welche das Kodierungsmaterial zu dem Außenraum hin abdeckt, wobei das Abdeckband durch das Trägerband gebildet ist, bekannt.

Der Erfindung liegt die Aufgabe zugrunde, ein Positions-/Wegmesssystem der eingangs genannten Art bereitzustellen, welches störungssicher arbeitet.

Diese Aufgabe wird bei dem eingangs genannten Positions-/Wegmesssystem erfindungsgemäß dadurch gelöst, dass der mindestens eine Sensorkopf eine erste Sensoreinheit und eine zweite Sensoreinheit umfasst, welche jeweilige Sensorsignale bereitstellen und welche in der Messrichtung beabstandet zueinander sind.

Dadurch, dass der Sensorkopf (mindestens) eine erste Sensoreinheit und eine zweite Sensoreinheit umfasst, lässt sich gleichzeitig an unterschiedlichen Stellen der Kodierungsspur eine Messung durchführen. Dadurch lassen sich Störungen an der mindestens einen Kodierungsspur detektieren und gegebenenfalls lassen sich Messirregularitäten, die aufgrund von Störungen am Maßkörper entstehen, berücksichtigen beziehungsweise kompensieren. Es ist dabei grundsätzlich möglich, dass "zufällige" Störungen als auch systematische Störungen erfasst werden.

Beispielsweise lässt sich eine Plausibilitätsprüfung durch Vergleich zwischen Messsignalen der ersten Sensoreinheit und der zweiten Sensoreinheit durchführen. Grundsätzlich sollte ohne Störungen die Differenz der Messsignale der ersten Sensoreinheit und der zweiten Sensoreinheit unter einer bestimmten Schwelle liegen. Wenn ein Schwellenwert überschritten wird, dann deutet dies auf eine Störung am Maßkörper hin. Durch das Vorsehen der mindestens ersten Sensoreinheit und zweiten Sensoreinheit wird dann eine erhöhte Redundanz erreicht, um beispielsweise erhöhten Sicherheitsanforderungen zu genügen.

Es ist beispielsweise dadurch auch möglich, Phasensprünge und/oder Lücken an Enden eines Maßkörpers zu kompensieren. Wenn beispielsweise ein Maßkörper um einen gekrümmten Gegenstand angeordnet ist wie beispielsweise an einem zylindrischen Gegenstand, dann können Enden mit einem Stoß aufeinandertreffen oder zwischen gegenüberliegenden Enden kann eine Lücke liegen. Durch die beabstandete erste Sensoreinheit und die zweite Sensoreinheit kann eine Lücke überfahren werden und es kann immer ein relevantes Messsignal generiert werden, sofern der Abstand zwischen der ersten Sensoreinheit und der zweiten Sensoreinheit größer als die Lücke ist. Es kann dann ein Phasensprung an einer Lücke kompensiert werden.

Günstig ist es, wenn die erste Sensoreinheit und die zweite Sensoreinheit gleich ausgebildet sind. Diese liefern dann insbesondere in vergleichbaren Situationen den gleichen Signalpegel. Es kann dann, wenn Signalpegelunterschiede vorliegen, auf eine Störung beziehungsweise Lücke usw. geschlossen werden.

Bei einer vorteilhaften Ausführungsform ist die mindestens eine Kodierungsspur periodisch kodiert mit periodisch angeordneten Feldern einer Breite B in der Messrichtung. Durch relative Bewegung des Sensorkörpers zu der mindestens einen Kodierungsspur lässt sich dann auf einfache Weise die Position beziehungsweise der Weg des Sensorkopfs relativ zu der mindestens einen Kodierungsspur ermitteln.

Bei einer Ausführungsform ist die mindestens eine Kodierungsspur magnetisch kodiert und der Sensorkopf ist magnetfeldsensitiv. Die magnetische Kodierung wird durch alternierende Anordnung von magnetischen Nordpolfeldern und Südpolfeldern erreicht.

Bei einer Ausführungsform umfassen die erste Sensoreinheit und die zweite Sensoreinheit jeweils einen ersten Sensor und einen zweiten Sensor, welche in der Messrichtung versetzt zueinander angeordnet sind. Der erste Sensor und der zweite Sensor geben bei einer Bewegung relativ zu der mindestens einen Kodierungsspur versetzte Signale aus. Dadurch können Perioden (wie beispielsweise magnetische Perioden) richtungsabhängig gezählt werden, um eine Positionsermittlung beziehungsweise Wegermittlung durchführen zu können. Beispielsweise ist der erste Sensor ein Sinussensor und der zweite Sensor ein Cosinussensor. Dadurch stellen der erste Sensor und der zweite Sensor phasenversetzte Signale bereit, aus denen dann insbesondere ein Winkel innerhalb einer Periode bestimmbar ist, aus dem wiederum die Position beziehungsweise der Weg ermittelbar ist. Der erste Sensor und der zweite Sensor sind beispielsweise in einen gemeinsamen Sensorchip integriert, welcher die entsprechende Sensoreinheit bildet.

Bei einer Ausführungsform umfasst der mindestens eine Sensorkopf ein Gehäuse und die erste Sensoreinheit ist an oder in der Nähe eines vorderen Endes des Gehäuses und/oder die zweite Sensoreinheit ist an oder in der Nähe eines hinteren Endes des Gehäuses angeordnet, wobei insbesondere der Abstand zwischen der ersten Sensoreinheit und der zweiten Sensoreinheit größer ist als ein Abstand der ersten Sensoreinheit zu dem vorderen Ende und/oder ein Abstand der zweiten Sensoreinheit zu dem hinteren Ende. Dadurch lässt sich ein großer Abstand zwischen der ersten Sensoreinheit und der zweiten Sensoreinheit erreichen. Dies wiederum ermöglicht eine gleichzeitige Messung an Bereichen der Kodierungsspur, welche einen entsprechend großen Abstand aufweisen. Dadurch wiederum lässt sich beispielsweise eine relativ große Lücke in der mindestens einen Kodierungsspur überbrücken. Es ist dadurch auch möglich, lokal begrenzte Störungen zu kompensieren.

Günstig ist es, wenn der mindestens eine Maßkörper mindestens einen Referenzmarker umfasst und der mindestens eine Sensorkopf mindestens eine Referenzmarker-Sensoreinheit umfasst, über welche der mindestens eine Referenzmarker detektierbar ist. Dadurch lassen sich absolute Positionen detektieren.

Günstig ist es, wenn eine Interpolatoreinrichtung vorgesehen ist, welche der ersten Sensoreinrichtung und der zweiten Sensoreinrichtung nachgeschaltet ist. Durch eine Interpolatoreinrichtung lässt sich für die entsprechende Sensoreinrichtung ein Winkel innerhalb einer Periode bestimmen, aus dem dann die Weginformationen beziehungsweise Positionsinformationen ermittelbar sind.

Es ist ferner günstig, wenn eine Ausgangstreibereinrichtung vorgesehen ist. Durch diese werden dann beispielsweise digitale Ausgangssignale bereitgestellt, welche Positionsinformationen beziehungsweise Weginformationen enthalten. Die Ausgangstreibereinrichtung kann Teil einer Interpolatoreinrichtung sein.

Bei einem Ausführungsbeispiel ist der ersten Sensoreinheit und der zweiten Sensoreinheit ein gemeinsamer Ausgangstreiber zugeordnet. Dadurch lässt sich der Verdrahtungsaufwand für den Sensorkopf gering halten.

Bei einer alternativen Ausführungsform sind der ersten Sensoreinheit und der zweiten Sensoreinheit getrennte Ausgangstreiber zugeordnet. Dadurch lassen sich Messsignale der ersten Sensoreinheit und der zweiten Sensoreinheit nach außen führen. Es kann dann beispielsweise eine dem Positions-/Wegmesssystem übergeordnete Steuerung eine Plausibilitätsprüfung durchführen oder dergleichen.

Günstig ist es, wenn eine Auswertungseinrichtung vorgesehen ist, durch welche überprüft wird oder prüfbar ist, ob ein Unterschied zwischen einem Messsignal der ersten Sensoreinheit und einem Messsignal der zweiten Sensoreinheit kleiner ist als eine vorgegebene Linearitätsabweichung der Sensoreinheit oder Sensoreinheiten. Dadurch kann eine Plausibilitätsüberprüfung durchgeführt werden, um beispielsweise Störungen zu detektieren und gegebenenfalls zu berücksichtigen beziehungsweise zu kompensieren.

Es ist dabei günstig, wenn die vorgegebene Linearitätsabweichung das Zweifache einer maximalen Linearitätsabweichung aus der Linearitätsabweichung in der ersten Sensoreinheit und der zweiten Sensoreinheit ist. Dadurch lässt sich sicherstellen, dass, wenn die vorgegebene Linearitätsabweichung überschritten wird, eine Störung vorliegen muss.

Es ist ferner günstig, wenn eine Auswertungseinrichtung vorgesehen ist, durch welche ein Vergleich von Messsignalen der ersten Sensoreinheit und der zweiten Sensoreinheit durchgeführt wird oder durchführbar ist. Aus dem Vergleich lässt sich ermitteln, ob eine Störung (insbesondere der Periodizität des Messkörpers) wie eine Lücke vorliegt und gegebenenfalls wo diese Lücke vorliegt. Dadurch wiederum lässt sich beispielsweise ein Überfahren einer Lücke kompensieren, indem beispielsweise die Messsignale einer bestimmten Sensoreinheit zur Weiterverarbeitung ausgewählt werden.

Es ist dann günstig, wenn eine Umschalteinrichtung vorgesehen ist, durch die schaltbar ist, ob Messsignale der ersten Sensoreinheit oder der zweiten Sensoreinheit zur Positions-/Wegermittlung verwendet werden. Dadurch kann beispielsweise eine lückenlose Messung erreicht werden, auch wenn der Sensorkopf eine Lücke an der mindestens einen Kodierungsspur durchfährt. Beispielsweise kann vorgesehen sein, dass die Messsignale einer bestimmten Sensoreinheit verwendet werden, wenn diese Sensoreinheit im Bereich einer Lücke ist, Messsignale der anderen Sensoreinheit verwendet werden und wenn die Lücke von allen Sensoreinheiten überfahren worden ist, dann wieder Messsignale der zuerst genannten Sensoreinheit verwendet werden.

Insbesondere werden der Umschalteinrichtung Messsignale der ersten Sensoreinheit und der zweiten Sensoreinheit zugeführt und diese führt einen Vergleich durch. Die Umschalteinrichtung (die insbesondere Teil einer Auswertungseinrichtung ist) kann dann bestimmen, welches die relevanten Messsignale sind. Die Umschalteinrichtung kann hardwaremäßig und/oder softwaremäßig realisiert sein.

Bei einer Ausführungsform weist die mindestens eine Kodierungsspur ein erstes Ende und ein zweites Ende auf, welche aneinander stoßen oder mit einer Lücke (einem Spalt) beabstandet zueinander sind. Insbesondere ist es dann vorgesehen, dass der Abstand zwischen der ersten Sensoreinheit und der zweiten Sensoreinheit im Sensorkopf in der Messrichtung größer ist als der Abstand zwischen dem ersten Ende und dem zweiten Ende der mindestens einen Kodierungsspur. Dadurch lässt sich ein Positionssignal beziehungsweise Wegsignal auch dann generieren, wenn mit dem Sensorkopf die Lücke überfahren wird.

Insbesondere ist die mindestens eine Kodierungsspur als Inkrementalspur ausgebildet. Durch Zählung von Perioden lässt sich dann ausgehend von einer Referenzposition eine Positionsermittlung beziehungsweise Wegermittlung erreichen.

Der mindestens eine Sensorkopf wird insbesondere berührungslos über der mindestens einen Kodierungsspur positioniert und/oder geführt. Es ist dabei grundsätzlich möglich, dass der Sensorkopf relativ zu der mindestens einen Kodierungsspur bewegt wird und/oder die mindestens eine Kodierungsspur relativ zu dem Sensorkopf bewegt wird.

Die nachfolgende Beschreibung bevorzugter Ausführungsformen dient im Zusammenhang mit den Zeichnungen der näheren Erläuterung der Erfindung. Es zeigen:
- Figur 1: eine schematische Teil-Seitenansicht eines Ausführungsbeispiels eines erfindungsgemäßen Positions-/Wegmesssystems;
- Figur 2: eine Ansicht eines Sensorkopfs des Positions-/Wegmesssystems gemäß Figur 1 in der Richtung A;
- Figur 3: eine schematische Teildarstellung eines Ausführungsbeispiels eines erfindungsgemäßen Wegmesssystems;
- Figur 4: eine schematische Teildarstellung eines weiteren Ausführungsbeispiels eines erfindungsgemäßen Wegmesssystems; und
- Figur 5: das Wegmesssystem gemäß Figur 4 mit einer Variante eines Maßkörpers.

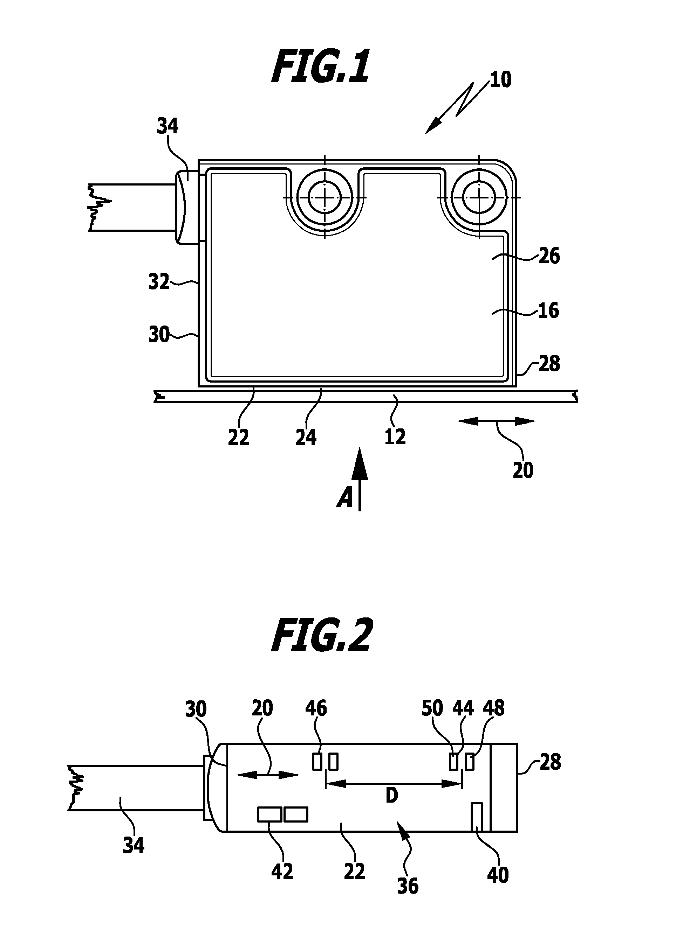

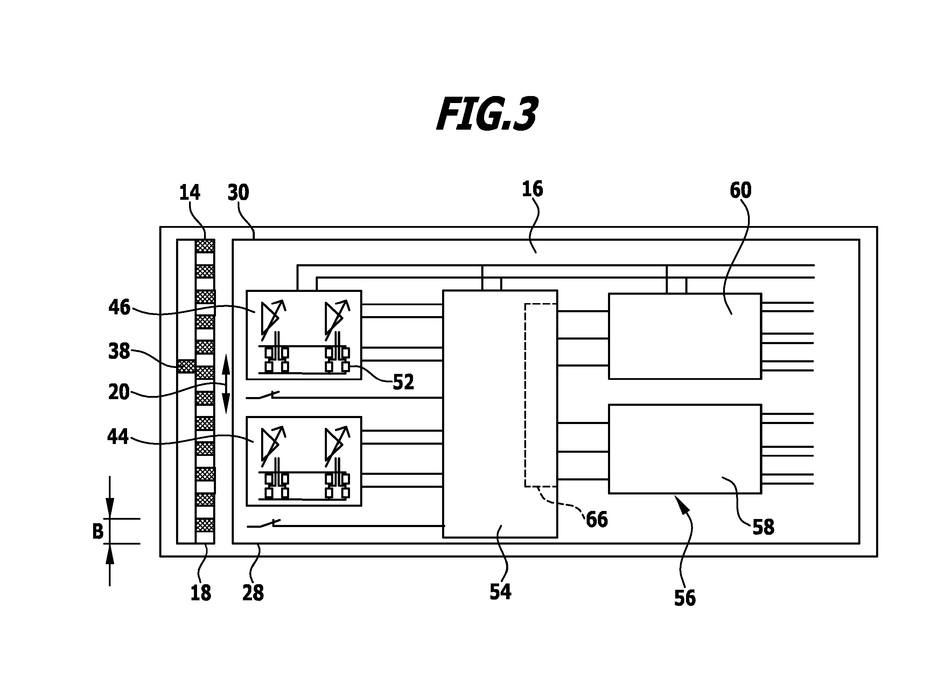

Ein Ausführungsbeispiel eines erfindungsgemäßen Positions-/Wegmesssystems, welches in Figur 1 schematisch gezeigt und dort mit 10 bezeichnet ist, umfasst einen kodierten Maßkörper 12. Beispielsweise ist der Maßkörper 12 magnetisch kodiert. Der Maßkörper 12 weist dazu beispielsweise einen Träger auf, auf welchem die magnetische Kodierung angeordnet ist. Die magnetische Kodierung ist beispielsweise durch ein Kunststoffband gebildet, welches flexibel ist und magnetisierbar ist. Die Kodierung des Maßkörpers 12 erfolgt durch eine entsprechende abwechselnde, periodische Anordnung von Kodierungsfeldern 14 (siehe beispielsweise Figur 3).

Im Beispielsfalle eines magnetisch kodierten Maßkörpers 12 erfolgt die Kodierung durch entsprechende abwechselnde, periodische Anordnung von Polfeldern des Typs Nordpol und Polfeldern des Typs Südpol.

Die magnetischen Feldlinien dieser Polfelder bilden ein dreidimensionales Vektorfeld. In diesem Feld ist ein Sensorkopf 16 insbesondere beweglich angeordnet.

Der Maßkörper 12 weist (mindestens) eine Kodierungsspur 18 (siehe beispielsweise Figur 3) auf, welche die Kodierung enthält. Die Kodierungsspur 18 erstreckt sich in einer Messrichtung 20. Die entsprechenden Kodierungsfelder 14 haben in der Messrichtung eine Breite B. Insbesondere ist die Breite B aller Kodierungsfelder 14 in der Messrichtung 20 gleich groß.

Die Kodierungsspur 18 weist auch eine Erstreckung in einer Richtung quer zur Messrichtung 20 auf, so dass die entsprechenden Kodierungsfelder 14 eine flächenhafte Ausdehnung aufweisen.

Die Position beziehungsweise der Weg (die Bewegung) des Sensorkopfs 16 relativ zu dem Maßkörper 12 ist in der Messrichtung 20 ermittelbar.

Der Sensorkopf 16 ist berührungslos über dem Maßkörper 12 positioniert beziehungsweise geführt. Er ist mit einer Unterseite 22 zu dem Maßkörper 12 in einer dritten Richtung beabstandet, wobei die dritte Richtung quer zu den Flächenausdehnungsrichtungen der Kodierungsfelder 14 orientiert ist. Zwischen der Unterseite 22 des Sensorkopfs 16 und dem Maßkörper 12 liegt ein Luftspalt 24.

Eine Normalenrichtung der Kodierungsfelder 14 liegt parallel zu einer Abstandsrichtung zwischen dem Sensorkopf 16 und dem Maßkörper 12.

Der Sensorkopf 16 weist ein Gehäuse 26 mit einem vorderen Ende 28 und einem dem vorderen Ende 28 gegenüberliegenden hinteren Ende 30 auf. An einer Seite 32 des Gehäuses 26, an welchem das hintere Ende 30 liegt, ist beispielsweise eine Kabelabgangseinrichtung 34 angeordnet. Über ein oder mehrere entsprechende Kabel lässt sich der Sensorkopf 16 mit Strom versorgen und es lassen sich Sensorsignale (welche insbesondere bereits verarbeitet sind) abführen.

Die Unterseite 22, welche sich zwischen dem vorderen Ende 28 und dem hinteren Ende 30 erstreckt, ist beispielsweise als Flachseite ausgebildet. Es ist aber auch grundsätzlich möglich, dass diese Unterseite 22 gekrümmt ist.

Der Maßkörper 12 kann beispielsweise an eine ebene Oberfläche angepasst sein oder er kann auch gekrümmt sein. Beispielsweise ist der Maßkörper 12 mit der Kodierungsspur 18 an einem zylindrischen Objekt fixiert, um Drehposition beziehungsweise Drehwege detektieren zu können.

Der Sensorkopf 16 ist Teil einer Sensoreinrichtung 36, welche für die Kodierung des Maßkörpers 12 sensitive Sensoren umfasst. Der Maßkörper 12 ist in dem Positions-/Wegmesssystem ein passives Teil. Die Sensoreinrichtung 36 mit dem Sensorkopf 16 ist in dem Sinne aktiv, dass sie die entsprechenden Messsignale bereitstellt.

Der Sensorkopf 16 weist eine Blickrichtung auf, welche von der Unterseite 22 ausgehend zu dem Maßkörper 12 gerichtet ist.

Die Kodierungsspur 18 ist eine Inkrementalspur zur inkrementellen Positionsbestimmung.

Es kann vorgesehen sein, dass der Maßkörper 12 zusätzlich zu der (mindestens einen) Kodierungsspur 18 ein oder mehrere Referenzmarker 38 aufweist, welche insbesondere neben der Kodierungsspur 18 angeordnet sind.

Der Sensorkopf 16 umfasst dann eine Referenzmarker-Sensoreinheit 40, über welche die Anwesenheit eines Referenzmarkers 38 detektierbar ist. Dadurch lässt sich (bei entsprechender Position des Sensorkopfs 16) durch den Sensorkopf 16 eine Referenzposition als Ausgangspunkt für eine inkrementelle Messung detektieren.

Es kann beispielsweise auch vorgesehen sein, dass der Sensorkopf 16 eine Endpunkt-Sensoreinheit 42 umfasst, um Endpunkte einer Kodierungsspur 18 zu detektieren.

Der Sensorkopf 16, welcher mehrere Sensoreinheiten umfasst, ist dann vorzugsweise so ausgestaltet, dass eine Referenzmarker-Sensoreinheit 40 beziehungsweise eine Endpunkt-Sensoreinheit 42 in einer Querrichtung zu der Messrichtung 20 bezüglich Sensoreinheiten zur eigentlichen Positions-/Wegermittlung an der Kodierungsspur 18 versetzt sind.

Zur eigentlichen Positions-/Wegermittlung umfasst der Sensorkopf 16 eine erste Sensoreinheit 44 und eine zweite Sensoreinheit 46. Die erste Sensoreinheit 44 und die zweite Sensoreinheit 46 sind in einem Abstand D in der Messrichtung 20 beabstandet zueinander. Der Sensorkopf 16 ist dabei so bezüglich der Kodierungsspur 18 positioniert, dass "im Normalfall" (siehe unten) sowohl die erste Sensoreinheit 44 als auch die zweite Sensoreinheit 46 über der Kodierungsspur 18 liegen, wobei jedoch entsprechend beabstandete Bereiche der Kodierungsspur 18 an die erste Sensoreinheit 44 und die zweite Sensoreinheit 46 gekoppelt sind. Diese entsprechenden Bereiche sind wiederum in der Messrichtung 20 zueinander beabstandet.

Die erste Sensoreinheit 44 und die zweite Sensoreinheit 46 können gleichzeitig Messsignale, welche durch die Position bezüglich der Kodierungsspur 18 bestimmt sind, bereitstellen, das heißt es wird an unterschiedlichen Stellen des Maßkörpers 12 gleichzeitig gemessen.

Bei einer Ausführungsform sind die erste Sensoreinheit 44 und die zweite Sensoreinheit 46 gleich ausgebildet.

Weiterhin liegt bei einer bevorzugten Ausführungsform die erste Sensoreinheit 44 an oder in der Nähe des vorderen Endes 28. Die zweite Sensoreinheit 46 liegt vorzugsweise an oder in der Nähe des hinteren Endes 30.

Grundsätzlich ist es auch möglich, dass neben der inkrementellen Kodierungsspur 18 eine Absolutpositionsbestimmungsspur vorgesehen ist. Es wird in diesem Zusammenhang auf die DE 10 2008 055 680 A1 verwiesen.

Bei einer Ausführungsform umfasst die erste Sensoreinheit 44 und die zweite Sensoreinheit 46 jeweils einen ersten Sensor 48 und einen zweiten Sensor 50. Der erste Sensor 48 und der zweite Sensor 50 sind in der Messrichtung 20 versetzt zueinander. Der Versetzungsabstand des ersten Sensors 48 und des zweiten Sensors 50 innerhalb der Sensoreinheit 44 beziehungsweise 46 ist insbesondere kleiner als der Abstand D.

Der Abstand zwischen dem ersten Sensor 48 und dem zweiten Sensor 50 ist so gewählt, dass der Phasenunterschied zwischen Signalen des ersten Sensors 48 und des zweiten Sensors 50 ein ganzzahliges ungerades Vielfaches von 90° beträgt. Wenn die Signale sinusförmig sind, dann liefert beispielsweise, wenn der erste Sensor 48 ein Sinussignal liefert, der zweite Sensor 50 ein Kosinussignal. Erster Sensor 48 und zweiter Sensor 50 werden deshalb auch als Sinussensor und Kosinussensor bezeichnet.

Der erste Sensor 48 und der zweite Sensor 50 sind beispielsweise über magnetfeldsensitive Brücken 52 (vergleiche Figur 3) realisiert.

Der Sensorkopf 16 enthält in dem Gehäuse 26 Signalverarbeitungselektronik und Auswertungselektronik.

Insbesondere ist eine Interpolatoreinrichtung 54 vorgesehen, welche der ersten Sensoreinheit 44 und der zweiten Sensoreinheit 46 nachgeschaltet ist. Diese stellen ihre Messsignale der Interpolatoreinrichtung 54 bereit. In der Interpolatoreinrichtung 54 werden die Messsignale des ersten Sensors 48 und des zweiten Sensors 50 der jeweiligen ersten Sensoreinheit 44 und der zweiten Sensoreinheit 46 auf einen Winkel innerhalb einer Periode der Kodierungsspur 18 umgerechnet. Die Polbreite B oder die Breite eines Polpaars bildet je nach Ausgestaltung des Sensorsystems die Periode. Mit dem Winkel der beiden Sensoren 48 und 50 und der Periode lässt sich dann die Position der entsprechenden Sensoreinheit 44 beziehungsweise 46 und dadurch die relative Position des Sensorkopfs 16 an der Kodierungsspur 18 bestimmen.

Grundsätzlich kann dabei eine Interpolatoreinrichtung 54 gemeinsam für die erste Sensoreinheit 44 und die zweite Sensoreinheit 46 vorgesehen werden. Es ist auch möglich, dass jede Sensoreinheit eine eigene Interpolatoreinrichtung hat.

Der Sensorkopf 16 kann dann über eine Ausgangstreibereinrichtung 56 entsprechende Positionssignale bereitstellen. Beispielsweise werden digitale A/B-Impulse, welche die Position charakterisieren ausgegeben.

Es ist dabei grundsätzlich möglich, dass die Ausgangstreibereinrichtung 56 einen ersten Ausgangstreiber 58 umfasst, welcher der ersten Sensoreinheit 44 zugeordnet ist. Dieser erste Ausgangstreiber 58 stellt die entsprechenden Positionssignale ermittelt mittels Messsignalen der ersten Sensoreinheit 44 bereit. Weiterhin ist ein zweiter Ausgangstreiber 60 vorgesehen, welcher der zweiten Sensoreinheit 46 zugeordnet ist und entsprechende Positionssignale ermittelt über die zweite Sensoreinheit 46 bereitstellt.

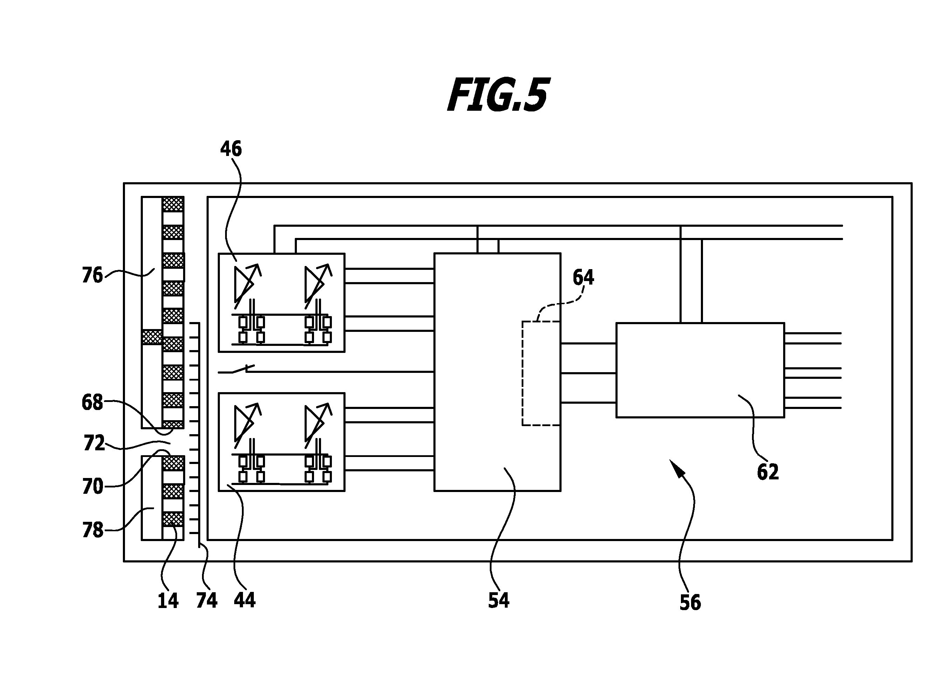

Bei einer alternativen Ausführungsform, welche in Figur 5 schematisch gezeigt ist, umfasst die Ausgangstreibereinrichtung 56 einen gemeinsamen Ausgangstreiber 62 für die erste Sensoreinheit 44 und die zweite Sensoreinheit 46 dadurch ist beispielsweise der Verdrahtungsaufwand minimiert. In diesem Falle umfasst der Sensorkopf 16 insbesondere eine Auswertungseinrichtung 64, welche entscheidet, welches Messsignal nach außen über den Ausgangstreiber 62 abgegeben wird.

Durch das Vorsehen der ersten Sensoreinheit 44 und der zweiten Sensoreinheit 46, welche in der Messrichtung 20 beabstandet sind, wobei grundsätzlich auch noch weitere Sensoreinheiten wie eine dritte Sensoreinheit usw. vorgesehen werden kann, lässt sich eine redundante Positions-/Wegermittlung realisieren.

Bei einem Anwendungsbeispiel ist eine Auswertungseinrichtung 66 vorgesehen, wobei die Auswertungseinrichtung 64 in diese integriert sein kann, welche die Messsignale der ersten Sensoreinheit 44 und der zweiten Sensoreinheit 46 vergleicht und auf Plausibilität prüft.

Grundsätzlich hat jede der Sensoreinheiten 44 und 46 eine Linearitätsabweichung. Die Differenz der Messsignale der ersten Sensoreinheit 44 und der zweiten Sensoreinheit 46 sollte, wenn keine Störung (insbesondere der Periodizität) am Maßkörper 12 vorliegt, kleiner sein als eine maximale Linearitätsabweichung. Die maximale Linearitätsabweichung ist dabei mindestens näherungsweise das Doppelte der größeren der Linearitätsabweichung der ersten Sensoreinheit 44 und der zweiten Sensoreinheit 46.

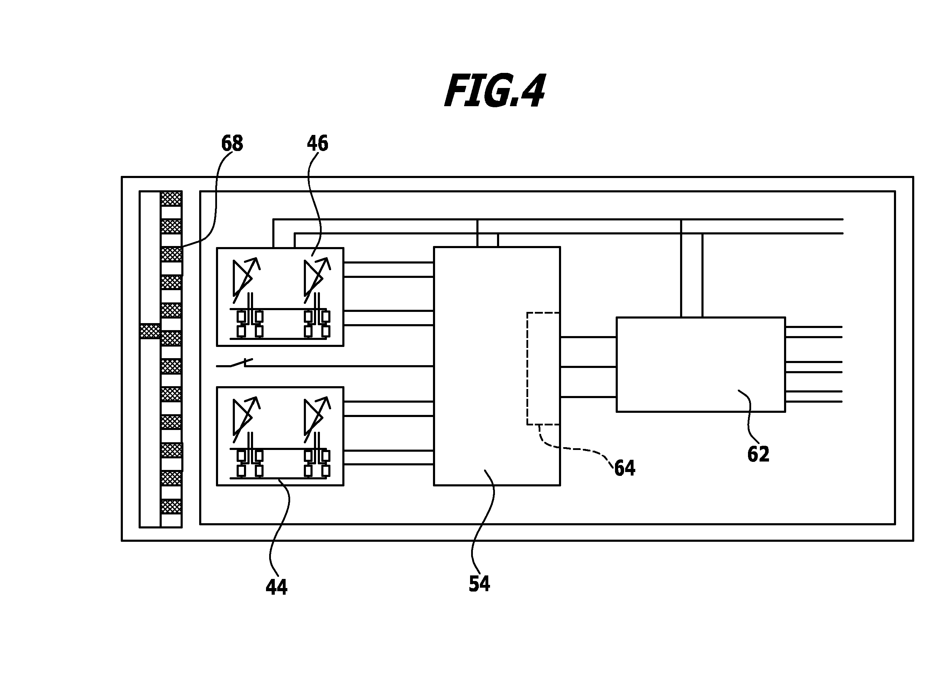

Wenn beispielsweise die Kodierungsspur 18 eine Störstelle aufweist (eine solche Störstelle ist in Figur 4 mit dem Bezugszeichen 68 angedeutet), dann ergibt sich unter Umständen eine Differenz zwischen Messsignalen der ersten Sensoreinheit 44 und der zweiten Sensoreinheit 46, welche oberhalb der maximalen Linearitätsabweichung liegt. Grundsätzlich ergibt sich dadurch bei der Auswertung eine Positionsdifferenz, wenn die Position anhand der Messsignale der ersten Sensoreinheit 44 und anhand der Messsignale der zweiten Sensoreinheit 46 bestimmt wird. Eine solche "gemessene" Positionsdifferenz zwischen dem Pfad der ersten Sensoreinheit 44 und dem Pfad der zweiten Sensoreinheit 46 lässt sich durch die Auswertungseinrichtung 66 erkennen und es lässt sich entsprechend reagieren.

Es ist dabei möglich, dass die Auswertungseinrichtung 66 in den Sensorkopf 16 integriert ist oder außerhalb des Sensorkopfs 16 in eine nachgeordnete Steuerung integriert ist.

Wenn die Auswertungseinrichtung 66 in den Sensorkopf 16 integriert ist, dann muss der Sensorkopf 16 gewissermaßen selber die Plausibilitätsprüfung durchführen.

In der Regel weist die Kodierungsspur 18 ein erstes Ende 68 und ein zweites Ende 70 auf (vergleiche Figur 5). Wenn beispielsweise der Maßkörper 12 mit der Kodierungsspur 18 um ein gekrümmtes Objekt gelegt wird, dann liegt ein Stoß vor, wenn das erste Ende 68 das zweite Ende 70 berührt, oder, wie in Figur 5 gezeigt, liegt ein Spalt 72 zwischen dem ersten Ende 68 und dem zweiten Ende 70. Dieser Spalt 72 kann die Positions-/Wegermittlung stören. Durch die erfindungsgemäße Lösung können Lücken beziehungsweise Spalte 72 im Maßkörper 12 erkannt werden und es lässt sich ein Kompensationsverfahren durchführen, um eine lückenlose Positions-/Wegermittlung zu erreichen.

Dies wird beispielhaft anhand Figur 5 erläutert:

Im Bereich des Spalts 72 erfolgt ein Phasensprung. Die Erläuterung ist an Maßstab 74 gezeigt. Die Striche an dem Maßstab 64 zeigen im oberen Bereich die Polteilung. Im unteren Bereich liegen die Striche nicht mehr an Rändern von entsprechenden Kodierungsfeldern 14, sondern in der Mitte. Dadurch hat die Periode an der Stoßstelle (im Bereich des Spalts 72) einen Phasensprung; der auf das zweite Ende 70 folgende Bereich ist um eine halbe Breite B verschoben. Dies kann grundsätzlich zu Nichtlinearitäten führen. Es kann dadurch auch eine starke Geschwindigkeitsabhängigkeit vorliegen: Wenn der entsprechende Bereich an Spalt 72 durch den Sensorkopf 16 langsam durchfahren wird, kann aufgrund des Spalts 72 (der Stoßstelle) eine große Geschwindigkeit aufgrund des entsprechenden Sprungs erkannt werden. Abhängig von einem minimalen Flankenabstand und einer mechanischen Auflösung kann eine solche starke Geschwindigkeitsänderung zu einer falschen Positions-/Wegangabe führen, insbesondere dann, wenn eine neue Position nicht mehr schnell genug ausgegeben werden kann, weil sonst der minimale Flankenabstand unterschritten würde und eine Periode verloren geht.

Durch die erfindungsgemäße Lösung sind solche Positions-/Wegermittlungsstörungen vermeidbar. Es muss grundsätzlich keine Phasenkonstanz an den Enden 68 und 70 vorliegen und es darf auch ein Spalt 72 vorliegen. Insbesondere sollte dabei die Breite des Spalts 72 in der Messrichtung 20 kleiner sein als der Abstand D zwischen der ersten Sensoreinheit 44 und der zweiten Sensoreinheit 46.

Wenn der Sensorkopf 16 über einen Bereich 76 der Kodierungsspur 18 fährt, an welchem das erste Ende 68 gebildet ist, dann sind die Messsignale der ersten Sensoreinheit 44 und der zweiten Sensoreinheit 46 grundsätzlich gleich. Wenn der Signalpegel genügend groß ist, können entsprechende Ausgangssignale bereitgestellt werden (unter Berücksichtigung der Referenzmarker-Sensoreinheit 40). Innerhalb einer Periode sind die Signale des ersten Sensors 48 und des zweiten Sensors 50 jeder Sensoreinheit 44 und 46 eindeutig. Die Interpolatoreinrichtung 54 kann den Winkel in einer Periode bestimmen und es können dann die entsprechenden insbesondere digitalen Impulse einem Ausgang bereitgestellt werden. Es kann dabei vorgesehen sein, dass nur ein Messsignal entweder der ersten Sensoreinheit 44 oder der zweiten Sensoreinheit 46 ausgegeben wird und/oder es kann ein Vergleich zwischen den Messsignalen für eine Plausibilitätsprüfung durchgeführt werden, um so beispielsweise Störungen und insbesondere Beschädigungen der Kodierungsspur 18 berücksichtigen zu können.

Wenn der Sensorkopf 16 von dem Bereich 76 in einen Bereich 78, in welchem das zweite Ende 70 gebildet ist, bewegt wird, dann verringert sich der Signalpegel von Messsignalen der ersten Sensoreinheit 44 im Bereich des Spalts 72. Bei entsprechend großem Spalt 72 geht das Messsignal der ersten Sensoreinheit 44 auf Null zurück. Wenn die zweite Sensoreinheit 46 im oberen Bereich 76 liegt, liefert diese weiterhin ein Messsignal mit entsprechendem Signalpegel. Über die zweite Sensoreinheit 46 lässt sich dadurch eine Positions-/Wegermittlung durchführen und über die erste Sensoreinheit 44 nicht mehr. Die Interpolatoreinrichtung 54 kann immer noch mit Messsignalen der zweiten Sensoreinheit 46 arbeiten und dabei digitale Ausgangsimpulse erzeugen.

Bei einer Weiterbewegung erreicht die erste Sensoreinheit 44 den Bereich 78 und es werden entsprechend wieder Messsignale mit geeignetem Signalpegel bereitgestellt. Durch die Auswertungseinrichtung 64 beziehungsweise 66 kann ein Vergleich durchgeführt werden und wenn beispielsweise erkannt wird, dass der Signalpegel von Signalen der zweiten Sensoreinheit 46 reduziert wird, kann über eine Umschalteinrichtung darauf umgeschalten werden, dass die Interpolatoreinrichtung jetzt Messsignale der ersten Sensoreinheit 44 verwendet, um digitale Ausgangssignale bereitzustellen.

Bei einer weiteren Bewegung liefern die erste Sensoreinheit 44 und die zweite Sensoreinheit 46 dort das Messsignal eines geeigneten Signalpegels und es kann dann beispielsweise wiederum darauf umgestellt werden, dass jetzt die zweite Sensoreinheit 46 die entsprechenden Ausgangssignale liefert.

Dieses Verfahren ist unabhängig von der Bewegungsrichtung des Sensorkopfs 16 relativ zu dem Maßkörper 12. Beispielsweise ist auch eine Drehrichtungsumkehr, wenn sich der Maßkörper 12 relativ zu dem Sensorkopf 16 dreht, möglich beziehungsweise es ist eine Orbitalbahnumkehr bei einer orbitalen Bewegung des Sensorkopfs 16 zu dem Maßkörper 12 möglich.

Durch die erfindungsgemäße Lösung lässt sich beispielsweise auch lückenlos die Position des Sensorkopfs 16 an einem Maßkörper 12 bestimmen, bei welchem eine Mehrzahl von Kodierungsspuren 18 hintereinander gesetzt sind mit einem Stoß beziehungsweise einer Lücke zwischen direkt aufeinanderfolgenden Kodierungsspuren.

Durch die erfindungsgemäße Lösung lässt sich über Vergleich von Messsignalen der ersten Sensoreinheit 44 und der zweiten Sensoreinheit 46 Unregelmäßigkeiten an dem Maßkörper 12 detektieren. Stöße oder Spalte 72, insbesondere wenn deren Breite kleiner ist als der Abstand D zwischen der ersten Sensoreinheit 44 und der zweiten Sensoreinheit 46, lassen sich bezüglich der Positions-/Wegermittlung kompensieren, das heißt sie wirken sich nicht störend auf die Positions-/Wegermittlung aus.

### Bezugszeichenliste

- 10: Positions-/Wegmesssystem
- 12: Maßkörper
- 14: Kodierungsfeld
- 16: Sensorkopf
- 18: Kodierungsspur
- 20: Messrichtung
- 22: Unterseite
- 24: Luftspalt
- 26: Gehäuse
- 28: Vorderes Ende
- 30: Hinteres Ende
- 32: Seite
- 34: Kabelabgangseinrichtung
- 36: Sensoreinrichtung
- 38: Referenzmarker
- 40: Referenzmarker-Sensoreinheit
- 42: Endpunkt-Sensoreinheit
- 44: Erste Sensoreinheit
- 46: Zweite Sensoreinheit
- 48: Erster Sensor
- 50: Zweiter Sensor
- 52: Magnetfeldsensitiver Bereich
- 54: Interpolatoreinrichtung
- 56: Ausgangstreibereinrichtung
- 58: Erster Ausgangstreiber
- 60: Zweiter Ausgangstreiber
- 62: Ausgangstreiber
- 64: Auswertungseinrichtung
- 66: Auswertungseinrichtung
- 68: Erstes Ende
- 70: Zweites Ende
- 72: Spalt
- 74: Maßstab
- 76: Bereich
- 78: Bereich

## Patentansprüche

1. Positions-/Wegmesssystem, umfassend mindestens einen kodierten Maßkörper (12) mit mindestens einer Kodierungsspur (18), welche sich in einer Messrichtung (20) erstreckt, und eine Sensoreinrichtung (36) mit mindestens einem für die Kodierung sensitiven Sensorkopf (16), **dadurch gekennzeichnet, dass** der mindestens eine Sensorkopf (16) mindestens eine erste Sensoreinheit (44) und eine zweite Sensoreinheit (46) umfasst, welche jeweilige Sensorsignale bereitstellen und welche in der Messrichtung (20) beabstandet zueinander sind.

2. Positions-/Wegmesssystem nach Anspruch 1, **dadurch gekennzeichnet, dass** die erste Sensoreinheit (44) und die zweite Sensoreinheit (46) gleich ausgebildet sind.

3. Positions-/Wegmesssystem nach Anspruch 1 oder 2, **dadurch gekennzeichnet, dass** die mindestens eine Kodierungsspur (18) periodisch kodiert ist mit periodisch angeordneten Feldern (14) einer Breite (B) in der Messrichtung (20).

4. Positions-/Wegmesssystem nach einem der vorangehenden Ansprüche, **dadurch gekennzeichnet, dass** die mindestens eine Kodierungsspur (18) magnetisch kodiert ist und der Sensorkopf (16) magnetfeldsensitiv ist.

5. Positions-/Wegmesssystem nach einem der vorangehenden Ansprüche, **dadurch gekennzeichnet, dass** die erste Sensoreinheit (44) und die zweite Sensoreinheit (46) jeweils einen ersten Sensor (48) und einen zweiten Sensor (50) umfassen, welche in der Messrichtung (20) versetzt zueinander angeordnet sind, und insbesondere **dadurch gekennzeichnet, dass** der Phasenunterschied zwischen Signalen des ersten Sensors (48) und des zweiten Sensors (50) n x 90° beträgt, wobei n eine ungerade natürliche Zahl ist.

6. Positions-/Wegmesssystem nach einem der vorangehenden Ansprüche, **dadurch gekennzeichnet, dass** der mindestens eine Sensorkopf (16) ein Gehäuse (26) umfasst und die erste Sensoreinheit (46) an oder in der Nähe eines vorderen Endes (28) des Gehäuses (26) und/oder die zweite Sensoreinheit (48) an oder in der Nähe eines hinteren Endes (30) des Gehäuses (26) angeordnet sind.

7. Positions-/Wegmesssystem nach einem der vorangehenden Ansprüche, **dadurch gekennzeichnet, dass** der mindestens eine Maßkörper (12) mindestens einen Referenzmarker (38) umfasst und dass der mindestens eine Sensorkopf (16) mindestens eine Referenzmarker-Sensoreinheit (40) umfasst, über welche der mindestens eine Referenzmarker (38) detektierbar ist.

8. Positions-/Wegmesssystem nach einem der vorangehenden Ansprüche, **gekennzeichnet durch** eine Interpolatoreinrichtung (54), welche der ersten Sensoreinrichtung (46) und der zweiten Sensoreinrichtung (48) nachgeschaltet ist.

9. Positions-/Wegmesssystem nach einem der vorangehenden Ansprüche, **gekennzeichnet durch** eine Ausgangstreibereinrichtung (56), und insbesondere **dadurch** gekennzeichnet, dass der ersten Sensoreinheit (46) und der zweiten Sensoreinheit (48) ein gemeinsamer Ausgangstreiber (62) zugeordnet ist oder dass der ersten Sensoreinheit (46) und der zweiten Sensoreinheit (48) getrennte Ausgangstreiber (58, 60) zugeordnet sind.

10. Positions-/Wegmesssystem nach einem der vorangehenden Ansprüche, **gekennzeichnet durch** eine Auswertungseinrichtung (64), **durch** welche überprüft wird oder überprüfbar ist, ob ein Unterschied zwischen einem Messsignal der ersten Sensoreinheit (46) und einem Messsignal der zweiten Sensoreinheit (48) kleiner ist als eine vorgegebene Linearitätsabweichung der Sensoreinheit (46; 48) oder Sensoreinheiten, und insbesondere, dass die vorgegebene Linearitätsabweichung das Zweifache einer maximalen Linearitätsabweichung aus den Linearitätsabweichungen der ersten Sensoreinheit (46) und der zweiten Sensoreinheit (48) ist.

11. Positions-/Wegmesssystem nach einem der vorangehenden Ansprüche, **gekennzeichnet durch** eine Auswertungseinrichtung (64; 66), **durch** welche ein Vergleich von Messsignalen der ersten Sensoreinheit (46) und der zweiten Sensoreinheit (48) durchgeführt wird oder durchführbar ist.

12. Positions-/Wegmesssystem nach Anspruch 11, **gekennzeichnet durch** eine Umschalteinrichtung, **durch** die schaltbar ist, ob Messsignale der ersten Sensoreinheit (46) oder der zweiten Sensoreinheit (48) zur Positions-/Wegermittlung verwendet werden, und insbesondere **dadurch** gekennzeichnet, dass die Umschalteinrichtung Messsignale der ersten Sensoreinheit (46) und der zweiten Sensoreinheit (48) empfängt und einen Vergleich durchführt.

13. Positions-/Wegmesssystem nach einem der vorangehenden Ansprüche, **dadurch gekennzeichnet, dass** die mindestens eine Kodierungsspur (18) ein erstes Ende (68) und ein zweites Ende (70) aufweist, welche aneinander stoßen oder beabstandet zueinander sind.

14. Positions-/Wegmesssystem nach einem der vorangehenden Ansprüche, **dadurch gekennzeichnet, dass** die mindestens eine Kodierungsspur (18) inkrementell ausgebildet ist.

15. Positions-/Wegmesssystem nach einem der vorangehenden Ansprüche, **dadurch gekennzeichnet, dass** der mindestens eine Sensorkopf (16) berührungslos über der mindestens einen Kodierungsspur (18) positioniert und/oder geführt ist.
